# EUROPEAN PATENT APPLICATION

(11) **EP 3 648 107 A1**
(43) Date of publication of application: **06.05.2020**
(21) Application number: 19206258.6
(22) Date of filing: 30.10.2019
(51) Int. Cl.: G11B 27/34, G06F 3/12, H04N 1/00

(54) **IMAGE PROCESSING APPARATUS**

(30) Priority: 05.11.2018 JP 2018207890
(71) Applicant: KYOCERA Document Solutions Inc., Osaka-shi, Osaka 540-8585 (JP)
(72) Inventor: ENOMOTO, Kyozo, Osaka-shi, Osaka 540-8585 (JP)
(74) Representative: Plougmann Vingtoft a/s

(57) **Abstract**

An image processing apparatus 1 for displaying, as a list, thumbnail images of files stored in a storage device 10, on a display portion 22, includes an extension determining portion 81, an image list generating portion 82, and a thumbnail generating portion 83. The extension determining portion identifies an extension of each of the files stored in the storage device, and when identified extensions are of file types that possibly contain thumbnail images, determines whether or not thumbnail images are contained in the files. The image list generating portion reads thumbnail images from files that have been determined as containing the thumbnail images, generates an image list in which the read thumbnail images are arranged in spaces for the files that have been determined as containing the thumbnail images, and blank images or preliminarily prepared fixed-form images are arranged in spaces for files that have been determined as not containing thumbnail images, and displays the generated image list on the display portion. The thumbnail generating portion generates thumbnail images from the files that have been determined as not containing thumbnail images, and additionally displays the generated thumbnail images in the image list.

## Description

### BACKGROUND

The present disclosure relates to an image processing apparatus that displays thumbnails of images stored in a storage device on a display device.

There is known a technology for generating a thumbnail image from a print preview image, and storing the generated thumbnail image in association with an original image of the print preview image in a storage device. This makes it possible to quickly display a list of thumbnail images as a list of images stored in the storage device.

### SUMMARY

An image processing apparatus according to an aspect of the present disclosure displays, as a list, thumbnail images of files stored in a storage device, on a display portion. The image processing apparatus includes an extension determining portion, an image list generating portion, and a thumbnail generating portion. The extension determining portion identifies an extension of each of the files stored in the storage device, and when identified extensions are of file types that possibly contain thumbnail images, determines whether or not thumbnail images are contained in the files. The image list generating portion reads thumbnail images from files that have been determined as containing the thumbnail images, generates an image list in which the read thumbnail images are arranged in spaces for the files that have been determined as containing the thumbnail images, and blank images or preliminarily prepared fixed-form images are arranged in spaces for files that have been determined as not containing thumbnail images, and displays the generated image list on the display portion. The thumbnail generating portion generates thumbnail images from the files that have been determined as not containing thumbnail images, and additionally displays the generated thumbnail images in the image list.

An image processing apparatus according to another aspect of the present disclosure displays thumbnail images of files stored in a storage device, on a display portion. The image processing apparatus includes an extension determining portion, a thumbnail generating portion, and a thumbnail display control portion. The extension determining portion identifies an extension of a designated file, and when the extension is of a file type that possibly contains a thumbnail image, determines whether or not a thumbnail image is contained in the file. The thumbnail generating portion generates a thumbnail image from the file determined as not containing the thumbnail image. The thumbnail display control portion, in a case where a thumbnail image is contained in the designated file, reads the thumbnail image from the designated file and displays the thumbnail image on the display portion, and in a case where a thumbnail image is not contained in the designated file, displays the thumbnail image generated by the thumbnail generating portion, on the display portion.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a schematic configuration of an embodiment of an image processing apparatus according to the present disclosure.
FIG. 2 is a flowchart explaining a process of displaying a list of thumbnail images performed by the image processing apparatus shown in FIG. 1.
FIG. 3A and 3B are diagrams showing examples of image lists displayed on a display portion shown in FIG. 1.
FIG. 4A, 4B and 4C are diagrams showing examples of a file name list, a thumbnail image, and a preview image displayed on the display portion shown in FIG. 1.
FIG. 5 is a flowchart explaining a process of displaying thumbnail images performed by the image processing apparatus shown in FIG. 1.
FIG. 6A and 6B are explanation diagrams explaining a process of displaying thumbnail images performed by the image processing apparatus shown in FIG. 1.

### DETAILED DESCRIPTION

The following describes an embodiment of the present disclosure in detail with reference to the accompanying drawings. It is noted that in the following embodiment, components having a same function are assigned a same reference sign.

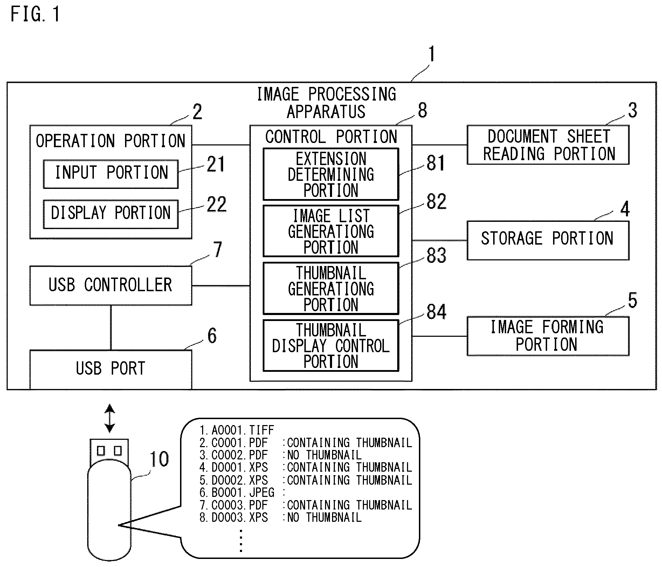

An image processing apparatus 1 of the present embodiment is an image forming apparatus such as a printer, a copier, or an MFP (Multifunction Peripheral/Printer/Product), and referring to FIG. 1, includes an operation portion 2, a document sheet reading portion 3, a storage portion 4, an image forming portion 5, a USB port 6, a USB controller 7, and a control portion 8.

The operation portion 2 is composed of, for example, operation keys or a touch panel through which settings of the image processing apparatus 1 or inputting of operation instructions can be done, and the operation portion 2 functions as an input portion 21 configured to receive various operations, and as a display portion 22 configured to display various operation keys and image formation states.

The document sheet reading portion 3 is a scanner for irradiating light on a document sheet fed by a document sheet feeding device (not shown) or on a document sheet placed on a platen glass by a user, and reading an image of the document sheet by receiving light reflected on the document sheet.

The storage portion 4 is a storage means such as a semiconductor memory or a HDD for storing images read by the document sheet reading portion 3, and storing print data received by a communication portion (not shown).

The image forming portion 5 is a printing means for printing the images stored in the storage portion 4. For example, the image forming portion 5 forms a latent image on a surface of a photoconductor drum based on an image read from the storage portion 4, forms a toner image with toner from the latent image, transfers the toner image from the photoconductor drum to a recording paper sheet, fixes the toner image to the recording paper sheet, and discharges the recording paper sheet.

The USB port 6 conforms to a USB standard, and has a function to output a detection signal when a USB memory 10 which is an attachable/detachable external storage device, is attached thereto, and has a function to read data from the USB memory 10 and output the read data to the USB controller 7.

The USB controller 7 has a function to determine whether or not the USB memory 10 is attached to the USB port 6, based on the detection signal from the USB port 6, and a function to, upon receiving from the control portion 8 an instruction to read data, read data from the USB memory 10 and output the data to the control portion 8.

The control portion 8 is connected to the operation portion 2, the document sheet reading portion 3, the storage portion 4, the image forming portion 5, and the USB controller 7. The control portion 8 is an information processing portion such as a microcomputer, and includes a CPU (Central Processing Unit), a ROM (Read Only Memory), and a RAM (Random Access Memory). The ROM stores control programs for controlling the operation of the image processing apparatus 1. The CPU controls the whole apparatus by reading the control programs from the ROM and expanding the control programs in the RAM.

In addition, the control portion 8 functions as an extension determining portion 81, an image list generating portion 82, a thumbnail generating portion 83, and a thumbnail display control portion 84.

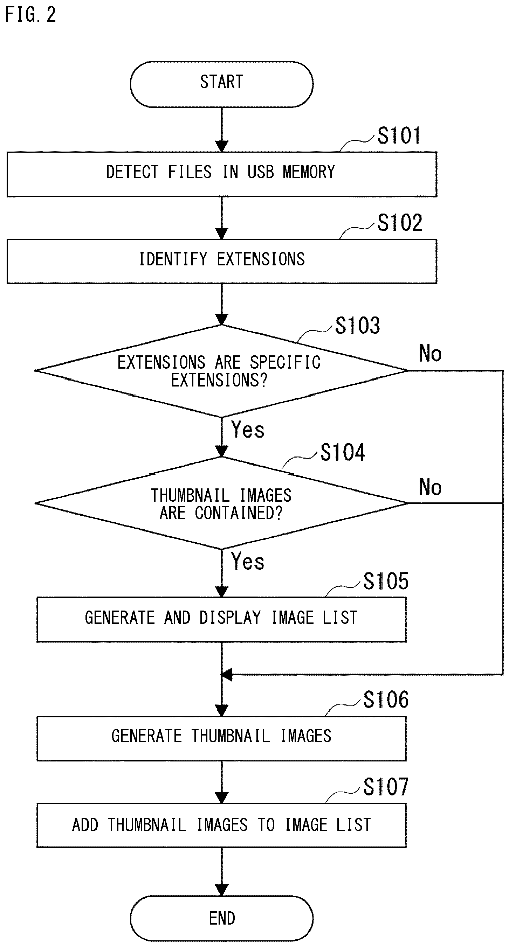

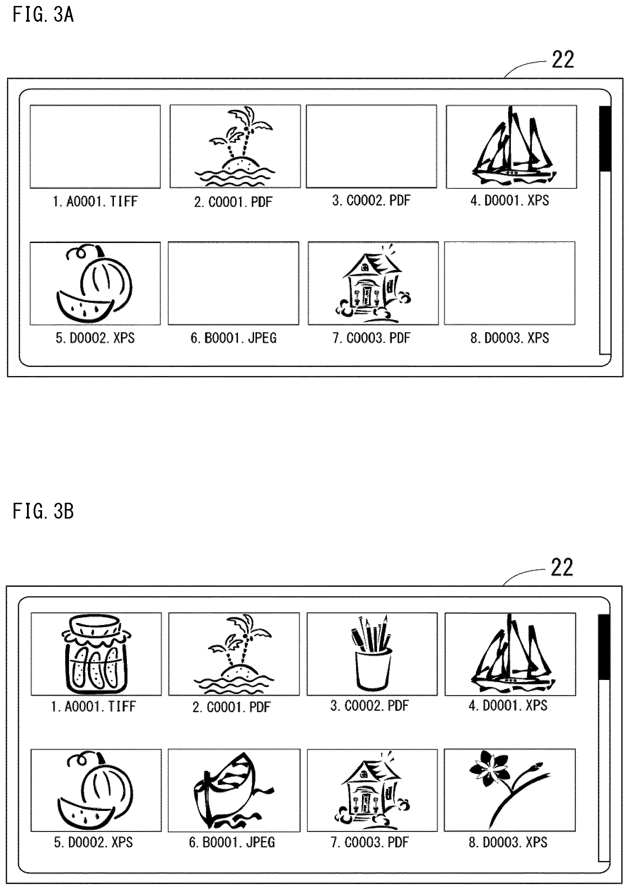

Next, a process of displaying a list of thumbnail images performed by the image processing apparatus 1 is described in detail with reference to FIG. 2, FIG. 3A, and FIG. 3B.

When the input portion 21 receives an operation instructing to display an image list using thumbnail images of files stored in the USB memory 10, the control portion 8 functions as the extension determining portion 81.

The extension determining portion 81 detects the files stored in the USB memory 10 (step S101), and identifies extensions of the detected files (step S102).

Subsequently, the extension determining portion 81 determines whether or not the extensions are preliminarily set specific extensions (step S103). It is noted that extensions, such as PDF and XPS, of file types that possibly contain thumbnail images are preliminarily set as the specific extensions.

Next, the extension determining portion 81 determines whether or not thumbnail images are contained in the files whose extensions were determined as specific extensions in step S103 (step S104).

Subsequently, in step S104, the image list generating portion 82 reads thumbnail images from files that have been determined as containing the thumbnail images. As shown in FIG. 3A, the image list generating portion 82 generates an image list in which blank images or preliminarily prepared fixed-form images are arranged in spaces for files that have been determined as not containing thumbnail images, and the read thumbnail images are arranged in spaces for files that have been determined as containing the thumbnail images, and displays the image list on the display portion 22 (step S105).

FIG. 3A shows an example of image list in which blank images are arranged in spaces for files 1, 3, 6 and 8 that have been determined as not containing thumbnail images, and thumbnail images are arranged in spaces for files 2, 4, 5 and 7 that have been determined as containing the thumbnail images.

Subsequently, the thumbnail generating portion 83 generates thumbnail images from files whose extensions were determined as not specific extensions in step S103 and from files which were determined as not containing thumbnail images in step S104 (step S106). Thereafter, the thumbnail generating portion 83 adds the generated thumbnail images in the image list displayed on the display portion 22 in step S104 (step S107), and ends the operation.

It is noted that files for which preview images were generated in step S106 can be replaced with new PDF files or XPS files containing the generated preview images. In this case, the file size becomes large. As a result, whether to replace the files may be determined by the user, or the files may be replaced automatically.

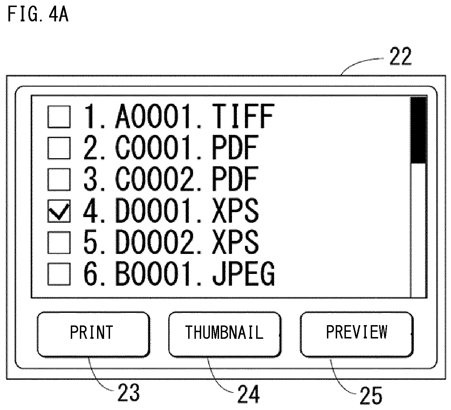

Next, a process of displaying designated thumbnail images performed by the image processing apparatus 1 is described in detail with reference to FIG. 4A to FIG. 6B.

When the input portion 21 receives an operation instructing to display a file name list of files stored in the USB memory 10, the control portion 8 displays, on the display portion 22, a file name list that includes check fields for receiving a designation of a file, as shown in FIG. 4A. Close to the file name list, a print button 23, a thumbnail button 24, and a preview button 25 are arranged, wherein the print button 23 is used to receive an instruction to print a designated file, the thumbnail button 24 is used to receive an instruction to display a thumbnail of a designated file, and the preview button 25 is used to receive an instruction to display a preview of a designated file.

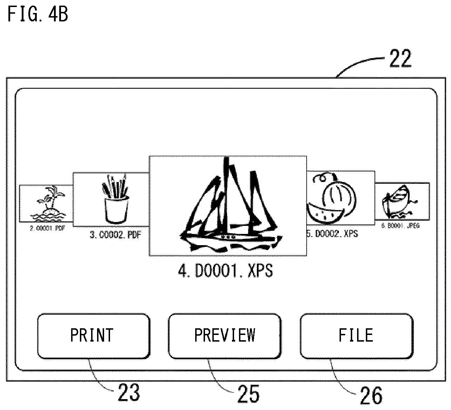

Upon receiving an operation of the thumbnail button 24, the control portion 8 functions as the thumbnail display control portion 84, and displays a thumbnail image of a designated file on the display portion 22, as shown in FIG. 4B. Close to the thumbnail image, the print button 23, the preview button 25, and a file button 26 are arranged, wherein the file button 26 is used to receive an instruction to display the file name list shown in FIG. 4A. In addition, when a flick operation is performed on the thumbnail image displayed on the display portion 22, the thumbnail display control portion 84 receives a change of designation of a file for which a thumbnail image is displayed.

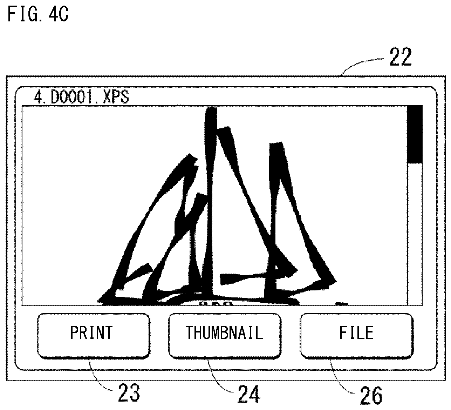

Upon receiving an operation of the preview button 25, the control portion 8 displays a preview image of a designated file on the display portion 22, as shown in FIG. 4C. Close to the preview image, the print button 23, the thumbnail button 24, and the file button 26 are arranged. In addition, when a flick operation is performed on the preview image displayed on the display portion 22, the control portion 8 receives a change of the page on which the thumbnail image is displayed.

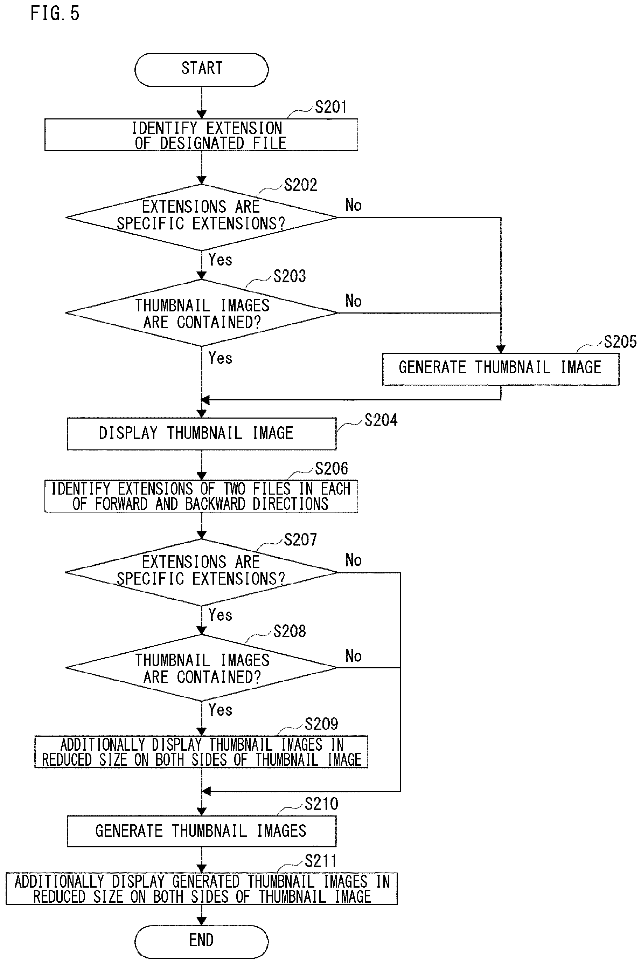

Referring to FIG. 5, upon receiving an operation performed on the thumbnail button 24, the control portion 8 functions as the extension determining portion 81, and identifies an extension of a designated file (step S201).

Next, the extension determining portion 81 determines whether or not the extension is a predetermined specific extension (step S202), and determines whether or not a thumbnail image is contained in the designated file whose extension was determined to be a specific extension in step S202 (step S203).

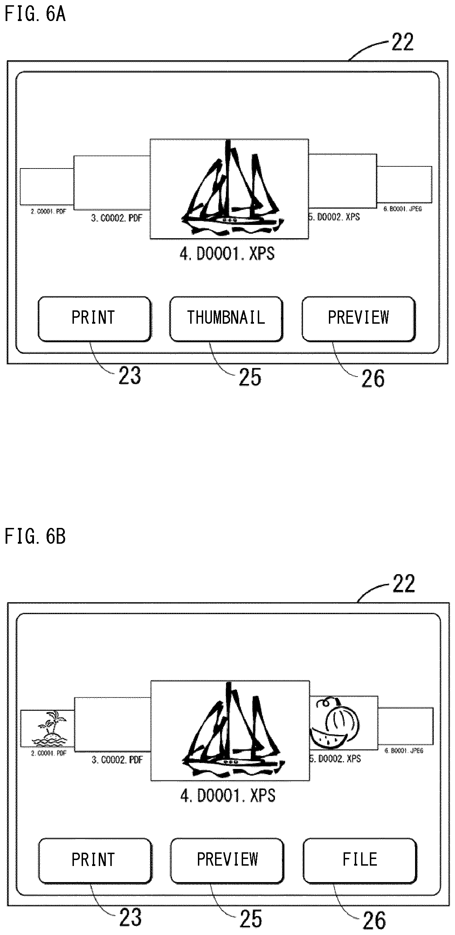

When it is determined in step S203 that a thumbnail image is contained in the file, the thumbnail display control portion 84 reads a thumbnail image from the file, and, as shown in FIG. 6A, displays the thumbnail image on the display portion 22 (step S204). It is noted that the thumbnail display control portion 84 displays, as change candidate thumbnails, two thumbnail images in reduced sizes in each of the forward direction and the backward direction of the thumbnail image of the designated file, close to the thumbnail image of the designated file. It is noted that the forward and backward directions are designation change directions in which the designation of file is changed by a flick operation.

At the time of step S204, blank images or preliminarily prepared fixed-form images have been arranged as the change candidate thumbnails. FIG. 6A shows an example in which a thumbnail image of the 4^{th} file is displayed, and two blank images are arranged in each of the forward and backward directions as the 2^{nd}, 3^{rd}, 5^{th}, and 6^{th} change-candidate thumbnails. It is noted that the number of change-candidate thumbnails is arbitrary.

When it is determined that the extension is not a specific extension in step S202, and when it is determined that a thumbnail image is not contained in the file in step S203, the control portion 8 functions as the thumbnail generating portion 83, and generates a thumbnail image from the designated file (step S205), and the process moves to step S204.

Subsequently, the extension determining portion 81 identifies the extensions of the two files in each of the forward and backward directions (step S206). The extension determining portion 81 then determines whether or not the extensions are specific extensions (step S207), and determines whether or not thumbnail images are contained in files whose extensions were determined as specific extensions in step S207 (step S208).

When it is determined in step S208 that thumbnail images are contained in the files, the thumbnail display control portion 84 reads the thumbnail images from the files, and, as shown in FIG. 6B, displays the thumbnail images that have been reduced to the sizes of the change candidate thumbnails, on both sides of the thumbnail image of the designated file (step S209). FIG. 6B shows an example in which thumbnail images of the 2^{nd} and 5^{th} files have been added.

Next, the thumbnail generating portion 83 generates thumbnail images from the files whose extensions were determined as not specific extension in step S207, and from the files that were determined as not containing thumbnail images in step S208 (step S210). The thumbnail generating portion 83 additionally displays the generated thumbnail images reduced to the sizes of the change candidate thumbnails, on both sides of the thumbnail image of the designated file (step S211), and ends the process.

Meanwhile, according to a conventional technology, in a case where files (original images) are stored in a storage device that is an attchable/detachable type such as a USB memory, thumbnail images may not be stored in association with the original images. In this case, there arises a problem that it takes a time to display an image list because in order to display an image list of files stored in the storage device, thumbnail images for all the files need to be generated.

As described above, the present embodiment discloses an image processing apparatus 1 for displaying, as a list, thumbnail images of files stored in a USB memory 10 that is a storage device, on a display portion 22, the image processing apparatus 1 including: an extension determining portion 81 configured to identify an extension of each of the files stored in the USB memory 10, and when the extensions (e.g., PDF, XPS) are of file types that possibly contain thumbnail images, determine whether or not thumbnail images are contained in the files; an image list generating portion 82 configured to read thumbnail images from files that have been determined as containing the thumbnail images, generate an image list in which the read thumbnail images are arranged in spaces for the files that have been determined as containing the thumbnail images, and blank images or preliminarily prepared fixed-form images are arranged in spaces for files that have been determined as not containing thumbnail images, and display the generated image list on the display portion 22; and a thumbnail generating portion 83 configured to generate thumbnail images from the files that do not contain thumbnail images, and additionally display the generated thumbnail images in the image list.

With the above-described configuration, it is possible to quickly display an image list of files stored in the USB memory 10 by using thumbnail images contained in the files.

Furthermore, the present embodiment discloses an image processing apparatus 1 for displaying thumbnail images of files stored in a USB memory 10 on a display portion 22, the image processing apparatus 1 including: an extension determining portion 81 configured to identify an extension of a designated file, and when the extension is of a file type that possibly contains a thumbnail image, determine whether or not a thumbnail image is contained in the file; a thumbnail generating portion 83 configured to generate a thumbnail image from the file determined as not containing the thumbnail image; and a thumbnail display control portion 84 configured to, in a case where a thumbnail image is contained in the designated file, read the thumbnail image from the designated file and display the thumbnail image on the display portion 22, and in a case where a thumbnail image is not contained in the designated file, display the thumbnail image generated by the thumbnail generating portion 83 on the display portion 22.

With the above-described configuration, in a case where thumbnail images are contained in files, it is possible to quickly display thumbnail images of files stored in the USB memory 10.

Furthermore, the present embodiment discloses that the thumbnail display control portion 84 displays, as change candidate thumbnails, thumbnail images of other files in reduced sizes, in proximity to the thumbnail image of the designated file, and when a flick operation is performed on the thumbnail image displayed on the display portion 22, the thumbnail display control portion 84 receives a change of designation of a file for which a thumbnail image is displayed, from the designated file to a file corresponding to one of the change candidate thumbnails of reduced sizes.

With this configuration in which change candidate thumbnails are prepared and displayed, it is possible to perform a flick operation on the thumbnail image to change the designation of the file to a desired file, and quickly display a thumbnail image of the file to which the designation was changed.

It is apparent that the present disclosure is not limited to the above-described embodiment, but the embodiment may be modified appropriately within the scope of the technical concept of the present disclosure. In addition, the number, position, and shape of the above-described components are not limited to those disclosed in the above embodiment, but appropriate number, position, and shape can be adopted for implementation of the present disclosure. It is noted that in the accompanying drawings, components having a same function are assigned a same reference sign.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image processing apparatus for displaying, as a list, thumbnail images of files stored in a storage device, on a display portion, the image processing apparatus comprising:
an extension determining portion configured to identify an extension of each of the files stored in the storage device, and when identified extensions are of file types that possibly contain thumbnail images, determine whether or not thumbnail images are contained in the files;
an image list generating portion configured to read thumbnail images from files that have been determined as containing the thumbnail images, generate an image list in which the read thumbnail images are arranged in spaces for the files that have been determined as containing the thumbnail images, and blank images or preliminarily prepared fixed-form images are arranged in spaces for files that have been determined as not containing thumbnail images, and display the generated image list on the display portion; and
a thumbnail generating portion configured to generate thumbnail images from the files that have been determined as not containing thumbnail images, and additionally display the generated thumbnail images in the image list.

2. An image processing apparatus for displaying thumbnail images of files stored in a storage device, on a display portion, the image processing apparatus comprising:
an extension determining portion configured to identify an extension of a designated file, and when the extension is of a file type that possibly contains a thumbnail image, determine whether or not a thumbnail image is contained in the file;
a thumbnail generating portion configured to generate a thumbnail image from the file determined as not containing the thumbnail image; and
a thumbnail display control portion configured to, in a case where a thumbnail image is contained in the designated file, read the thumbnail image from the designated file and display the thumbnail image on the display portion, and in a case where a thumbnail image is not contained in the designated file, display the thumbnail image generated by the thumbnail generating portion, on the display portion.

3. The image processing apparatus according to claim 2, wherein
the thumbnail display control portion displays, as change candidate thumbnails, thumbnail images of other files in reduced sizes, in proximity to the thumbnail image of the designated file, and when a flick operation is performed on the thumbnail image displayed on the display portion, the thumbnail display control portion receives a change of designation of a file for which a thumbnail image is displayed, from the designated file to a file corresponding to one of the change candidate thumbnails of reduced sizes.
